# EUROPÄISCHE PATENTSCHRIFT

(11) **EP 1 486 649 B1**
(45) Veröffentlichungstag und Bekanntmachung des Hinweises auf die Patenterteilung: **21.04.2010**
(21) Anmeldenummer: 04405349.4
(22) Anmeldetag: 04.06.2004
(51) Int. Cl.: F01N 3/28, B01J 35/04, B01D 53/94

(54) **Katalysator und Verfahren zu dessen Herstellung**
Catalyst and process for its production
Catalyseur et procédé pour sa fabrication

(30) Priorität: 06.06.2003 CH 9992003
(43) Veröffentlichungstag der Anmeldung: 15.12.2004
(73) Patentinhaber: SCAMBIA Industrial Developments Aktiengesellschaft, 9494 Schaan (LI)
(72) Erfinder: Steenackers, Pieter Delfina, Dr., 3030 Heverlee (BE); Alexnat, John W. Jörg, 3700 Tongeren (BE)
(74) Vertreter: Eder, Carl E.

(56) Entgegenhaltungen:
- DE-A- 10 123 359
- US-A- 3 920 404
- US-A- 4 101 290
- US-A- 5 809 776
- US-A- 6 096 682
- PATENT ABSTRACTS OF JAPAN Bd. 005, Nr. 160 (C-075), 15. Oktober 1981 (1981-10-15) & JP 56 089836 A (MITSUBISHI HEAVY IND LTD), 21. Juli 1981 (1981-07-21)

## Beschreibung

Die Erfindung betrifft einen Katalysator für die katalytische Behandlung von Abgas, insbesondere Abgas eines Verbrennungsmotors. Der Verbrennungsmotor kann beispielsweise zu einem Automobil oder eventuell einem sonstigen Motorfahrzeug gehören oder stationär angeordnet sein.

Aus der EP 0 775 808 B und der entsprechenden US 6 096 682 A bekannte Katalysatoren besitzen ein Gehäuse mit einem zylindrischen, im Querschnitt kreisförmigen Mantel, einem Einlass und einem Auslass. Das Gehäuse enthält zwei längliche, quaderförmige, V-förmig angeordnete Katalysatorkörper, die einander zugewandte Eintrittsflächen, einander abgewandte Austrittsflächen und von den Eintritts- zu den Austrittsflächen verlaufende Durchgänge für das Abgas. Der Einlass mündet in einen zwischen den Eintrittsflächen der beiden Katalisatorkörper verlaufenden Zuleit-Raum. Der zylindrische Mantel begrenzt zusammen mit einer an ihn anschliessenden, konischen Endwand einen an die Austrittsflächen der beiden Katalysatorkörper angrenzenden Ableit-Raum.

Solche Katalysatoren haben sich in der Praxis gut bewährt, benötigen jedoch wegen der zylindrischen Mäntel der Gehäuse viel Platz. Es besteht daher ein Bedürfnis nach Katalysatoren, deren Mantel kleinere Querschnittsabmessungen hat und im Querschnitt beispielsweise ungefähr rechteckförmig ist. Gemäss durchgeführten Untersuchungen machen jedoch im Querschnitt ungefähr rechteckförmige Mäntel mit nahe bei den einlassseitigen Enden der beiden Katalysatorkörper angeordneten Wänden die Abgas-Verteilung in den Katalysatorkörpern bei sonst weitgehend unveränderter Katalysatorausbildung stark inhomogen. Dies beeinträchtigt wiederum die katalytische Wirkung des Katalysators und erhöht den beim Betrieb entstehenden Gegendruck.

Ein aus der US 4 101 290 A bekannter Katalysator hat ein Gehäuse, das mit einem Einlass sowie einem Auslass versehen ist und ein V-förmiges Katalysatorbett enthält. Das Katalysatorbett weist Drahtgeflechte auf, zwischen denen ein Katalysatormaterial angeordnet ist. Die Drahtgeflechte bilden Gas-Eintrittsflächen sowie Gas-Austrittsflächen des Katalysatorbetts. Das Katalysatormaterial kann durch Auslässe abgeleitet werden und ist also wahrscheinlich teilchenförmig. Der Katalysator besitzt noch Gas-Leitmittel mit Leitplatten zum Leiten des Abgases. Jede Leitplatte hat einen schmalen, an einem Abschnitt eines Drahtgeflechtes anliegenden sowie befestigten Randstreifen und einen Hauptabschnitt, der vom Drahtgeflecht weggeneigt ist. Bei der Benutzung des Katalysators strömt Abgas durch den Einlass des Gehäuses in einen zwischen den beiden V-Schenkeln des Katalysatorbetts vorhandenen, inneren Hohlraum bzw. Zuleit-Raum, wird durch die bei den Gas-Eintrittsflächen vorhandenen Leitplatten umgelenkt, strömt danach durch das Katalysatorbett hindurch, wird teilweise durch die bei den Gas-Austrittsflächen vorhandenen Leitplatten umgelenkt und strömt dann durch den an die Gas-Austrittsflächen angrenzenden, äusseren Hohlraum bzw. Ableit-Raum in einer im Allgemeinen zur Längsrichtung des Gehäuses parallelen Ableit-Richtung zum Auslass des Gehäuses.

Zwischen den an ein und demselben äusseren Drahtgeflecht befestigten Leitplatten sind sowohl in einer zur Gas-Austrittsfläche des betreffenden V-Schenkels des Katalysatorbetts senkrechten Blickrichtung bzw. Projektion als auch in einer zu den Hauptabschnitten der Leitplatten senkrechten Blickrichtung oder Projektion und auch in einer zur Längsrichtung des Gehäuses und damit zur genannten allgemeinen Ableit-Richtung des Abgases senkrechten Blickrichtung oder Projektion grosse Lücken zwischen aufeinander folgenden Leitplatten vorhanden. Bei diesen Lücken kann Abgas ohne Umlenkung durch die Leitplatten in den sich ausserhalb der Leitplatten befindenden, äusseren Bereich des äusseren Hohlraums bzw. Ableit-Raums strömen. Dort wo solches nicht umgelenktes Abgas auf das durch den äusseren Bereich des Ableit-Raums ungefähr parallel zur Längsrichtung des Gehäuses abströmendes Abgas trifft, entstehen grosse und starke Wirbel. Die unvollständige Umlenkung des Abgases und die Erzeugung von Wirbeln werden noch dadurch verstärkt, dass das Abgas in verschiedene Richtungen durch das teilchenförmige Katalysatormaterial des Katalysatorbettes strömen kann und dass dieses also keine genau begrenzten Durchgänge mit definierten Durchgangsrichtungen aufweist. Die genannten, im Ableit-Raum erzeugten Wirbel ergeben die Nachteile, dass sie den Strömungswiderstand erhöhen und vor allem auch eine Rückwirkung auf die Gasströmung im Katalysatorbett haben. Diese Rückwirkung macht die Strömungsverteilung im Katalysatorbett inhomogen. Diese Inhomogenität der Strömungsverteilung im Katalysatorbett wird noch dadurch verstärkt, dass auch bei den Gas-Eintrittsflächen des Katalysatorbetts Leitplatten vorhanden sind, die Wirbel erzeugen. Ferner bedecken die an den Drahtgeflechten anliegenden Randstreifen der Leitplatten Abschnitte der Gas-Eintrittsflächen sowie der Gas-Austrittsflächen und behindern das Einströmen des Abgases in das Katalysatorbett sowie das Abströmen des Abgases aus dem Katalysatorbett. Dies vergrössert die genannte Inhomogenität ebenfalls. Die Inhomogenität der Gasverleitung im Katalysatorbett beeinträchtigt - analog wie bei den weiter vorne beschriebenen, bekannten Katalysatoren - die katalytische Wirkung und erhöht beim Betrieb den Gegendruck. Die Gas-Leitmittel des aus der US 4 101 290 A bekannten Katalysators haben zudem den Nachteil, dass jede Leitplatte separat an einer vorgesehenen Stelle eines Drahtgeflechtes an diesem befestigt werden muss, was die Herstellung des Katalysators erschwert und verteuert.

Der Erfindung liegt daher die Aufgabe zugrunde, einen Katalysator zu schaffen, der ermöglicht, Nachteile der bekannten Katalysatoren zu vermeiden. Dabei soll insbesondere ermöglicht werden, das Gehäuse des Katalysators bei gegebener Anordnung und gegebenen Abmessungen von mindestens einem im Gehäuse enthaltenen Katalysatorkörper möglichst flach und/oder mit möglichst kleinen Querschnittsabmessungen auszubilden und dennoch beim Betrieb eine sehr homogene Gasverteilung in dem bzw. jedem Katalysatorkörper sowie einen möglichst kleinen Gegendruck zu erzielen. Ferner sollen die Gas-Leitmittel einfach sowie schnell herstellbar und montierbar und der ganze Katalysator kostengünstig produzierbar sein.

Die Aufgabe wird ausgehend von dem aus der US 4 101 290 A bekannten Katalysator durch einen Katalysator gelöst, der gemäss der Erfindung die Merkmale des Anspruchs 1 aufweist.

Die Erfindung betrifft ferner ein Verfahren zur Herstellung eines Katalysators, wobei das Verfahren gemäss der Erfindung die Merkmale des Anspruchs 15 aufweist.

Vorteilhafte Weiterbildungen des Katalysators und das Verfahren gehen aus den abhängigen Ansprüchen hervor.

Der Erfindungsgegenstand und Vorteile von diesem werden anschliessend anhand in den Zeichnungen dargestellter Ausführungsbeispiele näher erläutert. In den Zeichnungen zeigt
Fig. 1 eine Draufsicht auf einen Katalysator mit zwei V-förmig angeordneten Katalysatorkörpern,
Fig. 2 einen zwischen den beiden Katalysatorkörpern hindurch verlaufenden Längsschnitt durch den Katalysator,
Fig. 3 einen Querschnitt entlang der Linie III - III in Fig. 2 durch den Katalysator,
Fig. 4 einen Längsschnitt entlang der Linie IV - in IV Fig. 2 durch den Katalysator, in grösserem Massstab als die Figuren 1 bis 3,
Fig. 5 den in Fig. 4 mit V bezeichneten Ausschnitt aus der Fig. 4 in noch grösserem Massstab,
Fig. 6 einen Querschnitt durch ein an einem der Katalysatorkörper befestigtes Gas-Leitorgan entlang der Linie VI - VI in Fig. 5,
Fig. 7 eine Schrägansicht eines Gas-Leitorgans,
die Figur 8 bis 10 Schrägansichten zur Veranschaulichung der Herstellung eines Gas-Leitorgans,
Fig. 11 ein anderes Gas-Leitorgan und
Fig. 12 einen zur Fig. 5 analogen Längsschnitt durch einen Teil eines Katalysators, aber mit einem gemäss der Fig. 11 ausgebildeten Gas-Leitorgan.

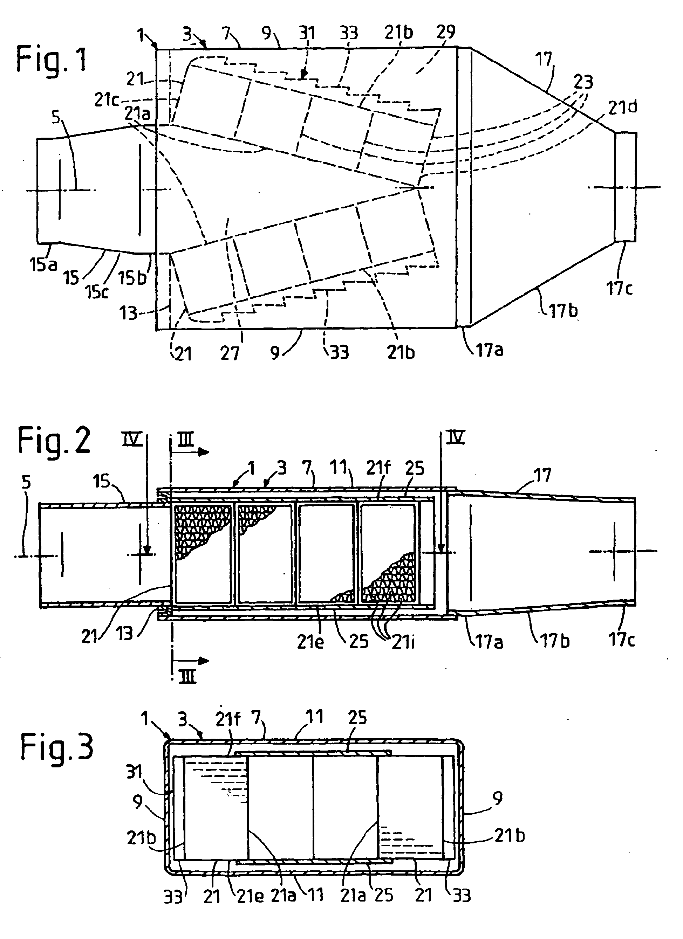

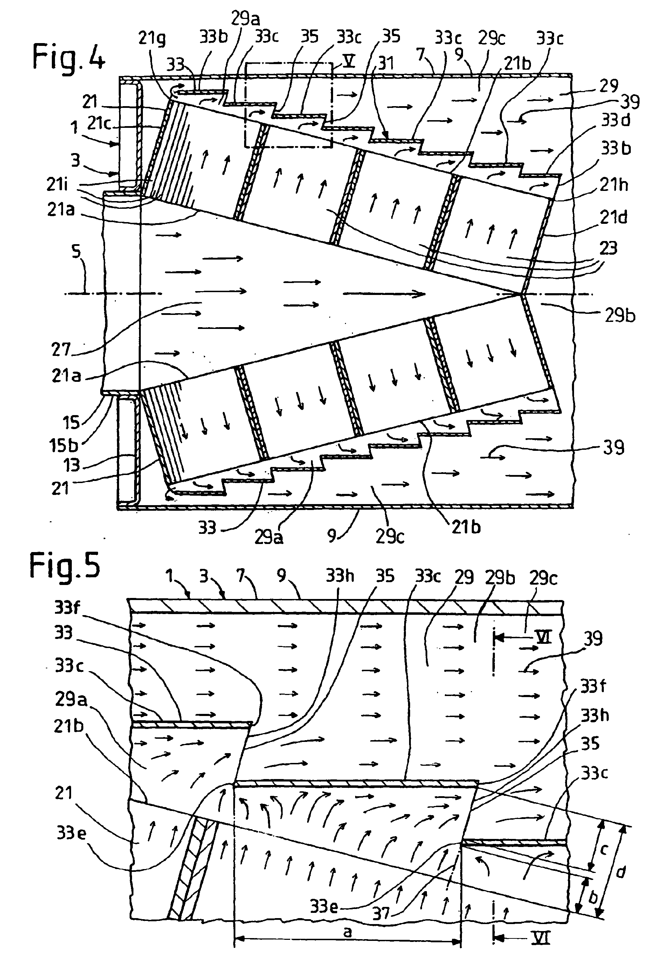

Der in den Figuren 1 bis 3 sowie zum Teil in den Figuren 4, 5 ersichtliche Katalysator 1 hat ein Gehäuse 3 mit einer Achse 5. Die Wandung des Gehäuses 3 besitzt einen im Wesentlichen zur Achse 5 parallelen Mantel 7. Dieser ist im Querschnitt im Wesentlichen - d.h. abgesehen von den beispielsweise durch abgerundete Übergänge ersetzten Ecken - viereckförmig, nämlich rechteckförmig. Der Mantel 7 hat zwei erste, schmälere, einander gegenüberstehende, im Wesentlichen ebene, zueinander sowie zur Achse 5 parallele Seitenwände 9 und zwei zweite, breitere, ebenfalls im Wesentlichen ebene und zueinander sowie zur Achse 5 parallele Seitenwände 11. An dem sich in den Figuren 1 bis 4 links befindenden Ende des Mantels 7 ist eine Einlass-Endwand 13 befestigt. Diese ist entsprechend der Querschnittsform des Mantels im Wesentlichen rechteckförmig und hat im Zentrum ein viereckförmiges Loch, das zum Beispiel ebenfalls rechteckförmig, aber schon fast quadratisch ist. Die längeren Ränder dieses Lochs sind zum Beispiel parallel zu den breiteren Seitenwänden 11 des Mantels. Die Einlass-Endwand 13 ist im Allgemeinen eben sowie rechtwinkelig zur Achse 5, hat jedoch zum Beispiel bei ihrem Aussenrand sowie beim zentralen Loch je einen vom Innenraum des Gehäuses weg nach aussen abgewinkelten und/oder abgebogenen Kragen, der den Aussenrand bildet bzw. das Loch begrenzt. Die Einlass-Endwand 13 sitzt derart im Innenraum des Mantels 7, dass der den Aussenrand der Endwand bildende Kragen ungefähr bündig mit dem sich dort befindenden Rand des Mantels ist. Der Einlass 15 des Gehäuses ist durch einen Stutzen gebildet und hat am einen, freien Ende einen kurzen zylindrischen, im Querschnitt kreisförmigen Endabschnitt 15a und am anderen Ende einen viereckförmigen, nämlich rechteckförmigen Endabschnitt 15b, der mindestens zum Teil im Loch der Einlass-Endwand 13 sitzt. Zwischen dem zylindrischen Endabschnitt 15a und dem viereckförmigen Endabschnitt 15b befindet sich ein diese zwei Endabschnitte miteinander verbundener Mittelabschnitt 15c. Das Gehäuse besitzt des Weiteren noch eine an dem sich in den Figuren 1 bis 4 rechts befindenden Ende des Mantels 7 angeordnete Auslass-Endwand 17. Diese hat einen rechteckförmigen Endabschnitt 17a, der mindestens teilweise im Innenraum des Mantels sitzt. An diesen schliesst ein Hauptabschnitt 17b an, der sich mindestens in der in Figur 1 dargestellten Ansicht vom Mantel weg trichterförmig verjüngt. An den Hauptabschnitt 17b schliesst ein kurzer zylindrischer, im Querschnitt kreisförmiger Ansatz an, der den Auslass 17c des Gehäuses bildet. Die verschiedenen, beschriebenen Teile des Gehäuses 3 sind beispielsweise durch Schweissen oder eventuell durch Hartlöten fest und dicht miteinander verbunden.

Der dicht gegen die Umgebung abgeschlossene Innenraum des Gehäuses enthält Katalysatormittel mit mindestens einem Katalysatorkörper 21 und nämlich mit zwei länglichen Katalysatorkörpern 21. Jeder Katalysatorkörper 21 ist im Wesentlichen quaderförmig und hat dementsprechend sechs im Wesentlichen ebene, paarweise zueinander parallele Flächen, nämlich eine Gas-Eintrittsfläche 21a, eine dieser abgewandte Gas-Austrittsfläche 21b, eine erste Endfläche 21c, eine zweite Endfläche 21d, eine erste Seitenfläche 21e oder Grundfläche und eine zweite Seitenfläche 21f oder Deckfläche 21f. Die Gas-Austrittsfläche 21b jedes Katalysatorkörpers 21 hat einen sich bei der ersten Endfläche 21c befindenden ersten Endrand 21g und einen sich bei der zweiten Endfläche 21d befindenden, zweiten Endrand 21h. Jeder Katalysatorkörper 21 enthält eine Vielzahl von Durchgängen 21i für das Gas. Die Durchgänge 21i verlaufen von der Gas-Eintrittsfläche 21a zur Gas-Austrittsfläche 21b und sind ungefähr gerade sowie parallel zueinander und ungefähr oder genau senkrecht zu den beiden Flächen 21a, 21b.

Jeder Katalysatorkörper ist aus mehreren, beispielsweise vier identisch ausgebildeten Blöcken 23 zusammengesetzt. Jeder Block 23 ist quaderförmig und hat eine metallische, im Querschnitt rechteckförmige, an beiden Enden offene Hülse. Die Hülsen liegen paarweise mit Wänden aneinander an und sind fest miteinander verbunden, beispielsweise verschweisst. Jede Hülse enthält ein Paket von abwechselnd aufeinander folgenden, ebenen und gewellten Blechelementen. Jedes Blechelement hat einen metallischen, nämlich aus Stahl bestehenden Kern, auf dessen zwei einander abgewandten Flächen Überzüge aufgebracht sind. Diese enthalten ein katalytisch aktives Material, das mindestens ein Edelmetall, zum Beispiel Platin und Rhodium aufweist.

Die beiden Katalysatorkörper 21 sind in der in Fig. 1 gezeichneten Draufsicht und im in der Fig. 4 ersichtlichen Schnitt V-förmig und symmetrisch zur Achse 5 angeordnet. Die beiden Gas-Eintrittsflächen 21a sind einander zugewandt. Die beiden Katalysatorkörper 21 sind bei den von den Gas-Eintrittsflächen 21a und zweiten Endflächen 21d gebildeten, aneinander anstossenden Kanten fest und dicht miteinander verbunden, nämlich verschweisst. Des Weiteren sind zwei ebene, metallische, aus Stahl bestehende Platten 25 vorhanden, von deren die eine an den Grundflächen bzw. ersten Seitenflächen 21e und die andere an den Deckflächen bzw. zweiten Seitenflächen 21f der beiden Katalysatorkörper anliegt Die beiden Platten 25 sind über die ganze Leitungen der Katalysatorkörper fest und dicht mit diesen verbunden, nämlich verschweisst. Die beiden Katalysatorkörper sind ferner bei den Kanten zwischen den Gas-Eintrittsflächen 21a und den ersten Endflächen 21c fest und dicht mit der Einlass-Wand 13 und dem Einlass 15 verbunden, nämlich verschweisst. Im Übrigen können die Katalysatorkörper noch zusätzlich - beispielsweise über die Platten 25 und/oder über sonstige Verbindungsteile - fest mit der Einlass-Endwand 21 verbunden sein.

Die Gas-Eintrittsflächen 21a der beiden Katalysatorkörper 21 begrenzen zusammen mit den beiden Platten 25 einen inneren Hohlraum oder Zuleit-Raum 27, in den der Einlass 13 mündet und durch den das vom Einlass kommenden Abgas beim Betrieb zu den Katalysatorkörpern geleitet wird. Das Gehäuse und insbesondere dessen Mantel 7 sowie Auslass-Endwand 17 begrenzen zusammen mit den Katalysatorkörpern 21 und den Platten 25 einen äusseren Hohlraum oder Ableit-Raum 29, der an die Gas-Austrittsflächen 21b der Katalysatorkörper angrenzt und durch den das beim Betrieb aus den Katalysatorkörpern ausströmende Gas zum Auslass 17c des Gehäuses geleitet wird.

Weitere Einzelheiten eines derartigen Katalysators und insbesondere solcher Katalysatorkörper und Verfahren für deren Herstellung sind übrigens in der bereits zitierten EP 0 775 808 B und der entsprechenden US 6 096 682 A offenbart. Diese Dokumente wurden daher ausdrücklich in die Beschreibung der vorliegenden Erfindung einbezogen, soweit sich keine Widersprüche ergeben.

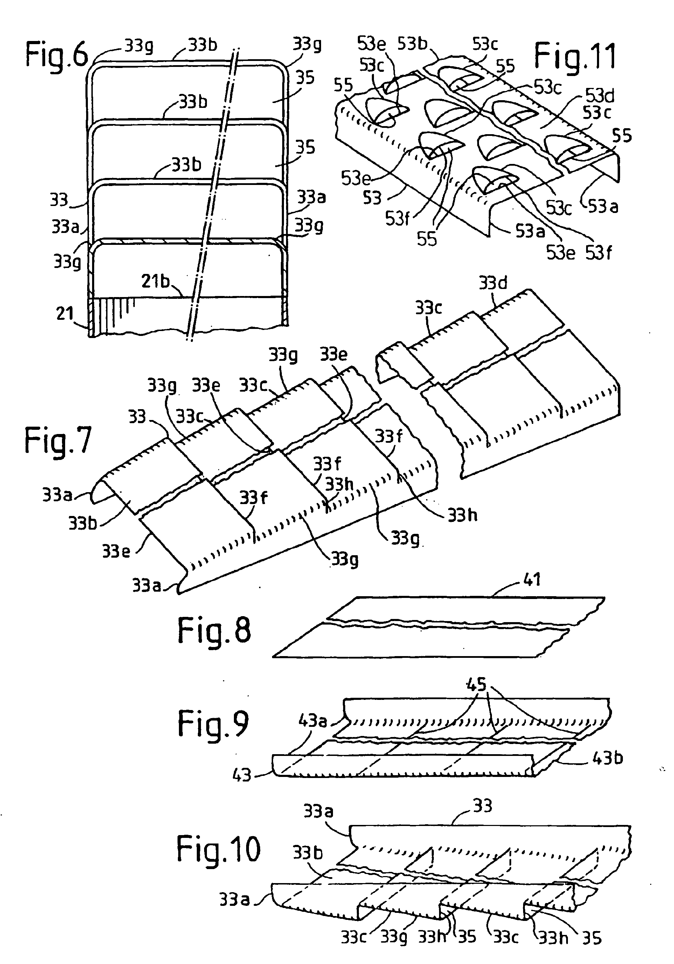

Der äussere Hohlraum oder Ableit-Raum 29 enthält Gas-Leitmittel 31 zum Leiten und Umlenken des aus den Katalysatorkörpern in den Ableit-Raum 29 strömenden Gases, d.h. Abgases. Die Gas-Leitmittel 31 weisen zwei Gas-Leitorgane 33 auf, von denen jedes einem der beiden Katalysatorkörper 21 zugeordnet ist und von denen eines auch in den Figuren 6, 7 und 10 ersichtlich ist. Jedes Gas-Leitorgan 33 ist aus einem einstückigen, metallischen Körper, nämlich aus einem Blechstück, gebildet und besteht vorzugsweise aus Stahl, beispielsweise rostfreiem Stahl. Jedes Gas-Leitorgan 33 bildet eine längliche treppenförmige, an beiden Enden offene Haube oder Rinne und besitzt zwei zueinander parallele Seitenwände 33a und eine Reihe von entlang der beiden Seitenwände aufeinander folgenden, treppenstufenartig angeordneten Deckelementen 33b, 33c, 33d. Diese umfassen ein erstes Deckelement 33b, mindestens ein intermediäres Deckelement 33c und ein letztes Deckelement 33d, wobei vorzugsweise mehrere intermediäre Deckelemente 33c vorhanden sind. Jedes Gas-Leitorgan hat dementsprechend insgesamt mindestens drei Deckelemente, nämlich vorzugsweise mindestens fünf und zum Beispiel sechs bis zehn Deckelemente.

Jedes Gas-Leitorgan ist derart bei der Gas-Austrittsfläche 21b von einem der beiden Katalysatorkörper 21 angeordnet, dass sich die Seitenwände 33a und die von den Deckelementen 33b, 33c, 33d gebildete Deckelementen-Reihe in der Längsrichtung der Gas-Austrittsfläche 21b erstrecken. Die beiden Seitenwände 33a eines Gas-Leitorgans 33 sind am zugeordneten Katalysatorkörper befestigt, beispielsweise mit diesem verschweisst oder durch Hartlöten verbunden. Die Seitenwände 33a können zum Beispiel gemäss Fig. 6 bei den Seitenwänden der Gas-Austrittsfläche 21b auf den diese Seitenränder bildenden Rändern der Hülsen der Blöcke 23 aufstehen. Jedes Gas-Leitorgan 33 ist ungefähr gleich lang wie der zugeordnete Katalysatorkörper 21 und dessen Gas-Austrittsfläche 21b. Die Deckelemente 33b, 33c, 33d erstrecken sich quer zum zugeordneten Katalysatorkörper, also ungefähr parallel zum ersten Deckelement-Rand 33c sowie zum zweiten Deckelement-Rand 33f mindestens annähernd über die ganze Breite der Gas-Austrittsfläche. Jedes Gas-Leitorgan 33 ist ferner derart angeordnet, dass sich das erste Deckelement 33b am nächsten beim ersten Endrand 21g der Gas-Austrittsfläche 21b und das letzte Deckelement 33d am nächsten beim zweiten Endrand 21h der Gas-Austrittsfläche befinden.

Der äussere Hohlraum oder Ableit-Raum 29 hat bei jedem Katalysatorkörper 21 einen sich zwischen diesem und den diesem zugeordneten Gas-Leitorgan 33 im Inneren des letzteren befindenden inneren Bereich 29a und/oder Umlenk-Bereich 29a, Der restliche Teil des Ableit-Raums 29 wird als äusserer Bereich 29b des Ableit-Raums bezeichnet. Dieser äussere Bereich 29b hat zwei äussere Teil-Bereiche 29c, von denen sich jeder zwischen einer der Seitenwände 9 und dem näher bei dieser angeordneten Gas-Leitorgan 33 befindet. Jeder äussere Teil-Bereich 29c grenzt also an diejenigen Flächen der Deckelemente 33b, 33c, 33d an, die der Gas-Austrittsfläche 21b des Katalysatorkörpers 21 abgewandt sind, an dem das betreffende Gas-Leitorgan befestigt ist.

Wie noch näher beschrieben wird, strömt das Gas beim Betrieb im Ableit-Raum 29 und insbesondere in dessen sich zwischen einer Seitenwand 9 des Gehäuses und dem dieser gegenüberstehenden Gas-Leitorgan 33 vorhandenen, äusseren Teil-Bereich 29c des Ableit-Raums 29 entlang einem allgemeinen Ableit-Strömungsweg in einer allgemeinen Ableit-Strömungsrichtung 39 von der Einlass-Endwand 13 weg zum Auslass 17c. Die allgemeine Ableit-Strömungsrichtung 39 verläuft im äusseren Teil-Bereich 29c ungefähr parallel zur Achse 5 und zum Mantel 7. Die Durchgänge 21 jedes Katalysatorkörpers 21 haben und definieren eine Durchgangsrichtung, mit der sie in die Austrittsfläche 21b des betreffenden Katalysatorkörpers münden. Die allgemeine Ableit-Strömungsrichtung 39 bildet mit der Durchgangsrichtung einen Winkel, der vorzugsweise im Bereich von 45° bis 135° liegt.

Das erste Deckelement 33h bildet das in Bezug auf den allgemeinen Ableit-Strömungsweg und die allgemeine Ableit-Strömungsrichtung 39 des Gases am weitesten stromaufwärts angeordnete Deckelement des Gas-Leitorgans 33.

Die Gas-Eintrittsflächen 21a und die zu diesen parallelen Gas-Austrittsflächen 21b bilden mit der Achse 5 und mit den zu dieser parallelen, ersten, schmäleren Seitenwänden 9 des Gehäuses Winkel, die höchstens 45°, vorzugsweise höchstens 30° und zum Beispiel ungefähr 10° bis 20° betragen. Die Deckelemente 33b, 33c, 33d sind in den in Fig. 4 und Fig. 5 gezeichneten Axialschnitten ungefähr oder genau parallel zur Achse 5 und zu den Gehäuse-Seitenwänden 9 und bilden dementsprechend mit der Achse 5 und den Gehäuse-Seitenwänden 9 Winkel, die höchstens 45°, vorzugsweise höchstens 30° und zum Beispiel 10° bis 20° betragen. Jedes Deckelement bildet dementsprechend in Schnitten entlang von Schnittebenen, die zur Durchgangsrichtung und zur allgemeinen Ableit-Strömungsrichtung und also zu den Schnittebenen der Figuren 4 und 5 parallel sind, mindestens zum grössten Teil und beispielsweise überall einen Winkel mit der Durchgangsrichtung der Durchgänge des ihm gegenüberstehenden Katalysatorkörpers.

Jedes Deckelement 33b, 33c, 33d hat zwei quer und zwar rechtwinklig zu den Seitenwänden 33a des betreffenden Gas-Leitorgans 33 verlaufende Ränder, nämlich einen ersten Rand 33e und einen zweiten Rand 33f. Der erste Rand 33e bildet die sich am nächsten bei der Gas-Austrittsfläche 21b befindende Stelle jedes Deckelements. Der zweite Rand 33f befindet sich auf der weiter vom ersten Endrand 21g der Gas-Austrittsfläche 21b entfernten Seite des betreffenden Deckelements und also - in Bezug auf den allgemeinen Ableit-Strömungsweg sowie die allgemeine Ableit-Strömungsrichtung - stromabwärts vom ersten Rand 33e. Jedes Deckelement hat zwei in den Figuren 6, 7 und 10 ersichtliche Seitenränder 33g, bei denen es mit den Seitenwänden 33a zusammenhängt. Jedes Gas-Leitorgan 33 hat ferner in den Figuren 5, 7 und 10 mit 33h bezeichnete Stufenränder, die sich beim ersten Deckelement 33b und bei den intermediären Deckelementen 33c von einem dieser Deckelemente zum jeweils nächsten, stromabwärts angeordneten Deckelement erstrecken. Jedes Deckelement 33b, 33c, 33d ist mindestens im Wesentlichen - d.h. abgesehen von eventuell bei den Seitenrändern 33g vorhandenen, verrundeten Übergängen - eben. Die ebenen Bereiche der zum gleichen Gas-Leitorgan 33 gehörenden Deckelemene sind ferner ungefähr oder genau parallel zueinander und beispielsweise auch annähernd oder genau parallel zur Achse 5 und zu der ihnen gegenüberstehenden, ersten Seitenwand 9 des Gehäuses 3.

Mindestens alle auf das erste Deckelement 33b und auf das an dieses angrenzende Loch 35 bzw. auf den an das erste Deckelement 33b angrenzenden Zwischenraum 35 folgenden Deckelemente 33c, 33d und nämlich auch das erste Deckelement 33b stehen zumindest in einem sich zwischen den beiden Seitenrändern 33g des Deckelements und also zwischen den beiden Seitenwänden 33a befindenden, inneren Bereich des Deckelements überall in Abstand von der Gas-Austrittsfläche 21b des zugeordneten Katalysatorkörpers und sind also in einer zur Gas-Austrittsfläche 21b senkrechten Richtung von dieser überall durch einen Zwischenraum getrennt. Jedes Gas-Leitorgan 33 berührt dementsprechend den zugeordneten Katalysatorkörper 21 ausschliesslich mit seinen Seitenwänden 33a neben und/oder bei beiden Längsrändern der Gas-Austrittsfläche 21b und nirgends im inneren Bereich der Gas-Austrittsfläche. Des Weiteren ist auch zwischen jedem Gas-Leitorgan 33 und den Wänden des Gehäuses 3, insbesondere der dem Gas-Leitorgan gegenüberstehenden Seitenwand 9 des Mantels 7, überall ein Zwischenraum vorhanden.

Zwischen den aufeinander folgenden Deckelementen ist jeweils ein Loch 35 und/oder Zwischenraum 35 vorhanden. Jedes Loch 35 bzw. jeder Zwischenraum 35 ist in einer zu den Deckelement-Rändern 33e, 33f verlaufenden Richtung länglich und hat einen ungefähr rechteckförmigen Umriss, wie es besonders deutlich in Fig. 6 ersichtlich ist. Jedes Loch 35 bzw. jeder Zwischenraum 35 wird durch den ersten Rand 33e eines Deckelements, einen zweiten Rand 33f des nächsten, stromaufwärts angeordneten Deckelements und die zwei diese zwei Deckelemente miteinander verbindenden Stufenränder 33h begrenzt. Diejenigen ersten und zweiten Ränder der Deckelemente, die sich bei einem Loch 35 oder Zwischen-Raum 35 befinden, bilden daher auch einen Rand 33e bzw. zweiten Rand 33f eines Lochs 35 und/oder Zwischenraums 35. Die ein und dasselbe Loch 35 bzw. denselben Zwischenraum 35 begrenzenden Ränder 33e und 33f von zwei entlang dem allgemeinen Ableit-Strömungsweg aufeinander folgenden Deckelementen definieren eine in Fig. 5 mit 37 bezeichnete Ränder-Verbindungsebene 37. Die ungefähr oder genau geraden Stufenränder 33h liegen ebenfalls mindestens teilweise und/oder mindestens annähernd in der Ränder-Verbindungsebene 37, so dass also alle Begrenzungsränder eines Lochs und/oder Zwischenraums 35 mindestens annähernd in dieser Ebene 35 liegen. Die Ränder-Verbindungsebene 35 bildet mit der dem betreffenden Gas-Leitorgan 33 gegenüberstehenden Gas-Austrittsfläche 21b einen Winkel. Dieser beträgt vorzugsweise 45° bis 135°, zum Beispiel 60° bis 120° und nämlich ungefähr 90°. Die Ebene 35 steht beispielsweise ungefähr oder genau senkrecht auf der Gas-Austrittsfläche 21b. Es sei jedoch angemerkt, dass die Ränder-Verbindungsebene statt dessen ungefähr senkrecht zur Achse 5 sein könnte. Ferner könnte die Ränder-Verbindungsebene eine sich zwischen diesen beiden Richtungen befindende Richtung haben.

Die intermediären Deckelemente 33c sind alle identisch ausgebildet sowie dimensioniert und haben eine vom ersten Rand 33e zum zweiten Rand 33f des betreffenden Deckelements 33c gemessene, in Fig. 5 mit a bezeichnete Abmessung. Ferner hat jedes Deckelement 33 einen beim ersten Rand 33e gemessenen Mindestabstand von der Gas-Austrittsfläche 21b. Dieser Mindestabstand ist in Fig. 5 mit b bezeichnet und beträgt mindestens bei jedem auf das erste Deckelement folgenden Deckelement 33c, 33d und eventuell auch beim ersten Deckelement 33b, mindestens 5%, höchstens 50% und beispielsweise 10% bis 30% der Abmessung a sowie vorzugsweise mindestens 1 mm und höchstens 5 mm. In Fig. 5 ist noch die von einem Deckelement zum nachfolgenden Deckelement gemessene Abmessung c eines Lochs 35 und/oder Zwischenraums 35 eingezeichnet. Diese Abmessung c beträgt vorzugsweise mindestens 10%, höchstens 50% und beispielsweise 15% bis 35% der Deckelement-Abmessung a. In Fig. 5 ist auch noch der Abstand d des zweiten Rands 33f von der Gas-Austrittsfläche 21b eingezeichnet. Dieser Abstand d bildet den Maximalabstand eines Deckelements von der Gas-Austrittsfläche und ist bei allen Deckelementen grösser als der Abstand b.

Jedes Deckelement 33b, 33c, 33d deckt in einer zur Gas-Austrittsfläche 21b des zugeordneten Katalysatorkörpers 21 senkrechten Blickrichtung einen streifenförmigen Bereich dieser Fläche ab. Die entlang dem allgemeinen Ableit-Strömungsweg aufeinander folgenden, durch ein Loch 35 und/oder einen Zwischenraum 35 voneinander getrennte Deckelemente eines Gas-Leitorgans 33 schliessen in einer in der genannten Blickrichtung erfolgenden Ansicht oder Projektion mindestens annähernd lückenlos aneinander an und/oder überlappen sich eventuell sogar ein wenig. Die aufeinander folgenden Deckelemente 33b, 33c, 33d können stattdessen oder zusätzlich in einer zu den Deckelementen senkrechten Blickrichtung oder Projektion mindestens annähernd lückenlos aneinander anschliessen und/oder sich in dieser Projektion vorzugsweise sogar ein wenig überlappen. Dementsprechend können die aufeinander folgenden Deckelemente 33b, 33c, 33d auch in einer Blickrichtung, die zur allgemeinen Ableit-Strömrichtung 39 des durch einen äusseren Teil-Bereich 29c des Ableit-Raums 29 strömenden Abgases senkrecht ist, mindestens annähernd lückenlos aneinander anschliessen und einander vorzugsweise ein wenig überlappen. Die zu einem Gas-Leitorgan gehörenden Deckelemente decken daher zusammen die Gas-Austrittsfläche 21b, der sie überall in Abstand gegenüberstehen, in mindestens einer der drei genannten Blickrichtungen mindestens zum grössten Teil und beispielsweise mindestens annähernd vollständig ab. Hierzu sei angemerkt, dass jede Gas-Austrittsfläche 21b eventuell an mindestens einem ihrer Enden, beispielsweise - wie in der Fig. 4 angedeutet - an ihrem sich am weitesten stromaufwärts befindenden Ende, einen schmalen Streifen hat, der in einer zur Gas-Austrittsfläche senkrechten Blickrichtung und/oder in einer zu den Deckelementen senkrechten Blickrichtung nicht abgedeckt ist. Die Gesamtheit der Deckelemente soll jedoch in der zur Gas-Austrittsfläche 21b senkrechten Blickrichtung und/oder in der zu den Deckelementen senkrechten Blickrichtung und/oder in der zur allgemeinen Strömrichtung 39 des durch einen äusseren Teil-Bereich 29c des Ableit-Raums 29 strömenden Abgases vorzugsweise mindestens 90% und besser mindestens 95% der Austrittsfläche 21b abdecken.

Es sei auch noch angemerkt, dass der sich zwischen den Gas-Eintrittsflächen 21a der beiden Katalysatorkörper 21 befindende, innere Hohlraum oder Zuleitraum 27 keine Gas-Leitorgane enthält.

Zur Herstellung eines Katalysators 1 werden in üblicher Weise Katalysatorkörper 21 hergestellt. Ferner wird für jeden Katalysatorkörper ein Gas-Leitorgan 33 hergestellt. Hierzu wird zuerst ein in Fig. 8 im Anfangszustand dargestellten Werkstück 41 bereitgestellt, das aus einem ebenen Blechstück besteht. Aus diesem wird durch Stanzen und/oder Schneiden sowie Umformen das in Fig. 9 ersichtliche, sich in einem Zwischenzustand befindenden Werkstück 43 gebildet. Dieses ist länglich sowie rinnen- oder haubenförmig und hat einen ebenen Mittelabschnitt 43b, der auf beiden Längsseiten mit einer abgebogenen oder eventuell abgewinkelten, senkrecht von ihm wegragenden Seitenwand 43a zusammenhängt. Der Mittelabschnitt 43b hat quer zu den Seitenwänden 43a verlaufende Schlitze, die vor oder nach dem Abbiegen oder Abwinkeln der Seitenwände oder gleichzeitig mit diesem Umformvorgang durch Stanzen und/oder Schneiden erzeugt werden. Die Schlitze 45 werden dabei beispielsweise ohne Entfernung von Material gebildet. Das Werkstück 43 kann nun durch weiteres Umformen, beispielsweise durch Tiefziehen, zum fertigen, auch in Fig. 10 ersichtlichen Gas-Leitorgan 33 geformt werden.

Beim Betrieb des Katalysators 1 strömt Gas, nämlich Abgas eines Verbrennungsmotors, durch den Einlass 15 im Allgemeinen ungefähr parallel zur Achse 5 in den inneren Hohlraum oder Zuleit-Raum 27, wird in diesem ohne zusätzliche Gas-Leitmittel beim Auftreffen auf die Gas-Eintrittsfläche 21a und/oder eventuell sehr kurz vor dieser durch die Katalysatorkörper 21 umgelenkt und strömt dann bei den Gas-Eintrittsflächen 21a der beiden Katalysatorkörper 21 in diese hinein, wie es in Fig. 4 durch Pfeile veranschaulicht ist. Danach strömt das Abgas durch die Durchgänge 21i der Katalysatorkörper 21 und wird in diesen katalytisch behandelt und insbesondere gereinigt. Wenn das Abgas beim und/oder eventuell sehr kurz vor dem Eintritt in die Durchgänge umgelenkt wird, können kleine, lokale Turbulenzen entstehen, die jedoch in den Durchgängen nach einer kurzen Strecke wieder abklingen. Im Zuleit-Raum 27 entstehen jedoch kaum Wirbel oder jedenfalls keine grossen Wirbel, die einen Rückstau verursachen könnten. Das Abgas wird daher gleichmässig auf alle Durchgänge der Katalysatorkörper verteilt. Das Abgas strömt nach dem Durchströmen der Katalysatorkörper in zu den Durchgangsrichtungen parallelen, ungefähr oder genau zu den Gas-Austrittsflächen 21b der beiden Katalysatorkörper senkrechten Austritts-Strömungsrichtungen aus den Katalysatorkörpern heraus in die inneren Bereiche und/oder Umlenk-Bereiche 29a des Ableit-Raums 29 sowie gegen die Deckelemente 33b, 33c, 33d der Gas-Leitorgane 33 und wird durch diese ungefähr in der in Fig. 5 durch Pfeile veranschaulichten Weise umgelenkt. Der grösste Teil des gegen ein bestimmtes Deckelement strömenden Gases wird durch dieses Deckelement in Fig. 5 nach rechts zum Auslass hin umgelenkt und strömt dann durch das Loch 35 bzw. den Zwischenraum 35 beim zweiten Rand 33f des betreffenden Deckelements hindurch in den sich zwischen dem Gas-Leitorgan 33 und der diesem gegenüberstehenden Gehäuse-Seitenwand 9 befindenden, äusseren Teil-Bereich 29c des Ableit-Raums 29. Dieser Teil des Gases strömt also mehr oder weniger parallel zur allgemeinen Ableit-Strömungsrichtung 39 des Gases in den äusseren Teil-Bereich 29c des Ableit-Raums. Gemäss numerischen Strömungsberechnungen strömt auch noch ein kleiner Teil des von einem Katalysatorkörper gegen ein Deckelement strömenden Gases in der Fig. 5 zunächst nach links und dann um den ersten Rand 33e des Deckelements herum in den äusseren Teil-Bereich 29c des Ableit-Raums. In dem vom Mantel 7 umschlossenen Teil des äusseren Bereichs 29b des Ableit-Raums 29 ist die Ableit-Gasströmung dann zum grössten Teil ungefähr parallel zur Achse 5 sowie zu den Wänden des Mantels zum Auslass hin gerichtet. Die durch Ableit-Gasströmung definierte, allgemeine Ableit-Strömungsrichtung 39 ist dementsprechend in den äusseren Teil-Bereichen 29c des Ableit-Raums - schon erwähnt - ungefähr parallel zur Achse 5 und bildet mit der erwähnten Austritts-Strömungsrichtung einen Winkel von etwa 90° bis 135°.

Die Deckelemente 33b, 33c, 33d lenken also mindestens den grössten Teil, nämlich vorzugsweise mindestens 90% oder noch besser mindestens 95% und praktisch alles aus einer der beiden Gas-Austrittsflächen 21b ausströmende Gas um, bevor dieses Gas einen der sich zwischen einer ersten Seitenwand 9 und dem dieser gegenüberstehenden Gas-Leitorgan 33 befindenden, äusseren Teil-Bereiche 29c des Ableit-Raums 29 erreicht. Die Gas-Leitorgane 33 verhindern dementsprechend zumindest annähernd vollständig, dass das ungefähr senkrecht zu den Gas-Austrittsflächen 21b auströmende Gas aus den Katalysatorkörpern 21b direkt auf das ungefähr parallel zur Achse 5 durch den äussern Teil-Bereich 29c des Ableit-Raums abgeleitete Gas auftrifft. Das ergibt den Vorteil, dass beträchtlich weniger Turbulenzen entstehen, als es ohne die Gas-Leitorgane der Fall wäre. Es kann insbesondere praktisch vollständig verhindert werden, dass das aus den Katalysatorkörpern ausströmende Gas in den äusseren Teil-Bereichen 29c des Ableit-Raums 29 grosse Wirbel verursacht. Auch in den inneren Bereichen 29a des Ableit-Raums 29 entstehen höchstens relativ kleinräumige Turbulenzen. Die Bildung von Wirbeln im Ableit-Raum 29 werden durch die Gas-Leitorgane 33 insbesondere auch dann stark reduziert, wenn der Mantel 7 des Gehäuses gemäss Fig. 3 im Querschnitt ungefähr rechteckförmig ist und Querschnittsabmessungen hat, die nur wenig grösser sind, als der bei den einlassseitigen Enden der Katalysatorkörper im Querschnitt von diesen eingenommene Raum. Die erwähnte, weitgehende Vermeidung der Erzeugung von Wirbeln ergibt wiederum den Vorteil, dass die Strömung des Gases im Ableit-Raum keine nachteilige Rückwirkung auf die Gasströmung in den Katalysatorkörpern hat, so dass die Verteilung des Gases und der Strömungsgeschwindigkeit in den Katalysatorkörpern weitgehend homogen bleibt. Eine homogene Gas- und Geschwindigkeitsverteilung gewährleistet wiederum einen optimalen Wirkungsgrad der katalytischen Behandlung des Abgases. Die erwähnte, weitgehende Vermeidung der Bildung von Wirbeln trägt zudem dazu bei, den im Ableit-Raum von Gas erzeugte Gegendruck niedrig zu halten.

Die in Fig. 11 gezeichnete Variante eines mit 53 bezeichneten Gas-Leitorgans hat zwei Seitenwände 53a und ein Deckelement 53b. Dieses erstreckt sich beispielsweise ungefähr über die ganze Länge der Gas-Austrittsfläche 21a eines zugeordneten Katalysatorkörpers 21 und hat einen ebenen, plattenförmigen Grundabschnitts 53d, der mit einer Vielzahl von haubenförmig ausgebuchteten Abschnitten 53c versehen ist. Jeder von diesen begrenzt an seinem sich stromabwärts befindenden Ende zusammen mit dem ebenen Grundabschnitt 53d ein Loch 55. Dieses hat dementsprechend einen beispielsweise ungefähr geraden, vom ebenen Grundabschnitt gebildeten, ersten Rand 53e und einen von einem ausgebuchteten Abschnitt 53c gebildeten, gewölbten, mindestens stellenweise gebogenen, zweiten Rand 53f. Die am weitesten vom ungefähr geraden, ersten Rand 53e entfernte Stelle des gewölbten, zweiten Rands 53f bildet dessen Scheitel. Die Breiten der ausgebuchteten Abschnitten 53c und der von diesen begrenzten Löcher 55 sind wesentlich kleiner als die Breite des Deckelements 53b. Dafür sind die ausgebuchteten Abschnitte und Löcher jedoch sowohl über die Länge als auch über die Breite des Deckelements 53b verteilt. Das Deckelement 53b hat bei jeder parallel zu den Seitenwänden 53a verlaufenden Reihe von ausgebuchteten Abschnitten 53c eine Anzahl von Bereichen, von denen sich jeder von einem ersten Rand 53e eines Lochs 55 bis zu einem zweiten Rand 53f eines anderen Lochs 55 erstreckt und einen ebenen, vom plattenförmigen Grundabschnitt 53d gebildeten Teil-Bereich sowie einen von einem ausgebuchteten Abschnitt 29c gebildeten Teil-Bereich aufweist.

Das Gas-Leitorgan 53 kann auf ähnliche Weise hergestellt werden wie ein Gas-Leitorgan 33. Anstelle der in Fig. 9 über die ganze Breite des Mittelabschnitts 43b ersichtlichen Schlitze 45 wird der zur Bildung des Deckelements 53b vorgesehene Werkstück-Mittelabschnitt jedoch nur mit kürzeren, über die Breite des Mittelabschnitts verteilten Schlitzen versehen. Danach wird bei jedem dieser Schlitze durch Umformen eine ausgebuchteter Abschnitt 53c gebildet.

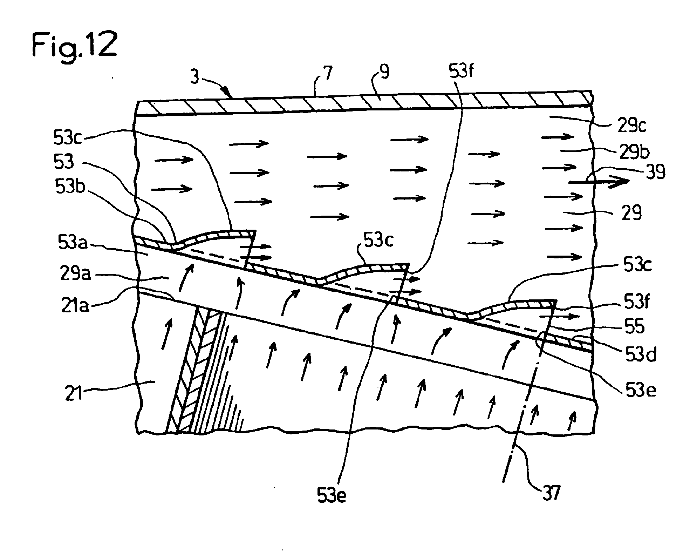

Das Gas-Leitorgan 53 kann gemäss der Fig. 12 analog wie ein Gas-Leitorgan 33 an einem Katalysatorkörper 21 befestigt werden, der zusammen mit einem anderen, in der Fig. 12 nicht ersichtlichen Katalysatorkörper in einem Gehäuse 3 angeordnet ist. Dieses besitzt wie das in den Figuren 1 bis 5 ersichtliche Gehäuse 3 einen Mantel 7 mit zwei einander gegenüberstehenden Seitenwänden 9, von denen in der Fig. 12 nur eine sichtbar ist. Der ebene Grundschnitt 53d des Leitorgans 53 ist gemäss der Fig. 12 beispielsweise ungefähr oder genau parallel zur Austrittsfläche 21a des Katalysatorkörpers 21. Der vom ebenen Grundabschnitt des Deckelements 53b gebildete, ungefähr gerade, erste Rand 53e jedes Lochs 55 befindet sich dann näher bei der Gas-Austrittsfläche 21a des Katalysatorkörpers 21 als der Scheitel des gewölbten, zweiten Rands 53f des betreffenden Lochs 55. Dabei ist zum Beispiel mindestens der grösste Teil des gewölbten Loch-Rands und praktisch der ganze gewölbte Loch-Rand weiter von der Gas-Austrittsfläche 21a entfernt als der vom ebenen Grundabschnitt 53d gebildete, ungefähr gerade Loch-Rand 53e. Der Scheitel des gewölbten, zweiten Loch-Rands 53f und die beiden einander abgewandten Enden des vom ebenen Grundabschnitt gebildeten, beispielsweise ungefähr geraden, ersten Loch-Rands 53e definieren dann zusammen eine Ränder-Verbindungsebene 37, die der in Fig. 5 ersichtlichen Ränder-Verbindungsebene 37 entspricht und mit der Gas-Austrittsfläche des Katalysatorkörpers einen Winkel von vorzugsweise 45° bis 135°, beispielsweise 60° bis 120° und nämlich ungefähr 90° bildet. Dabei liegen die beiden LochRänder zum Beispiel über ihre ganzen Längen mindestens annähernd in der genannten Ränder-Verbindungsebene. Die ausgebuchteten Abschnitte 53c sind in einem Schnitt, der in der Längsrichtung des Gas-Leitorgans durch den Scheitel des zweiten Rands 53f des beim betreffenden, ausgebuchteten Abschnitt 53c vorhandenen Lochs 55 verläuft, beispielsweise gemäss der Fig. 12 mindestens stellenweise gebogen. Jeder ausgebuchtete Abschnitt 53c des Gas-Leitorgans 53 hat beim Scheitel des zweiten Rands 53f des Lochs 55 beispielsweise einen im genannten Schnitt ungefähr geraden Abschnitt. Dieser Abschnitt oder eine sich an diesen Abschnitt anschmiegende Tangente ist ungefähr oder genau parallel zur ihm gegenüberstehenden Seitenwand 9 des Gehäuses 3 und zur in Fig. 12 nicht sichtbaren Achse des Gehäuses. Es sei noch angemerkt, dass die ausgebuchteten Abschnitte 53c im genannten, in der Fig. 12 dargestellten Schnitt statt gebogen auch mehr oder weniger vollständig gerade und zur Achse des Gehäuses parallel sein könnten.

Soweit vorgängig nichts anderes geschrieben wurde, kann der teilweise in Fig. 12 ersichtliche Katalysator gleich oder ähnlich ausgebildet sein, wie der anhand der Figuren 1 bis 5 beschriebene Katalysator. Das Gas-Leitorgan 53 ergibt beim Betrieb eines Katalysators eine ähnliche Wirkung und insbesondere eine ähnliche, in Fig. 12 schematisch durch Pfeile angeordnete Umlenkung des Gases wie ein Gas-Leitorgan 33.

Die Katalysatoren und ihre Herstellung können noch auf andere Weisen modifiziert werden. So könnte man beispielsweise einen Katalysator bilden, der nur einen einzigen Katalysatorkörper enthält. Dessen Gas-Eintrittsfläche könnte dann beispielsweise ungefähr senkrecht zur Achse des Einlasses angeordnet werden, so dass das Abgas ungefähr parallel zur Einlass-Achse durch den Katalysatorkörper strömt. Der Ableit-Raum und der Auslass könnten dann eine Achse haben, die mit der Einlass-Achse einen Winkel bildet und beispielsweise schief oder ungefähr parallel zur Gas-Austrittsfläche des Katalysatorkörpers ist.

Die Gas-Leitorgane können ebenfalls geändert werden. Beim Gasleitorgan 33 könnte dessen sich stromaufwärts befindendes Ende zum Beispiel mit einer mit dem ersten Deckelement zusammenhängenden Endwand versehen werden, die zum Katalysatorkörper hin ragt und den seitlich von den beiden Seitenwänden 33a begrenzten Kanal bei dessen sich am weitesten stromaufwärts befindenden Ende ganz oder teilweise abschliesst. Der vom Gas-Leitorgan 53 begrenzte Kanal kann an seinem in Fig. 11 nicht sichtbaren, sich am weitesten stromaufwärts befindenden Ende wahlweise offen oder geschlossen sein. Des Weiteren könnten die Deckelemente 33b, 33c, 33d des Gas-Leitorgans 33 eventuell noch mit zu den ausgebuchteten Abschnitten 53c und Löchern 55 analogen, ausgebuchteten Abschnitten und Löchern versehen werden. Ferner könnten die zusammen aus einem einstückigen Körper gebildeten Deckelemente des Gas-Leitorgans 33 durch eine Reihe von Deckelementen ersetzt werden, die aus separaten Werkstücken gebildet und an den zugeordneten Katalysatorkörpern befestigt sind.

## Patentansprüche

1. Katalysator für die katalytische Behandlung von Gas, insbesondere von Abgas eines Verbrennungsmotors, mit mindestens einem in einem Gehäuse (3) angeordneten Katalysatorkörper (21), der eine Eintrittsfläche (21a) und eine Austrittsfläche (21b) für das Gas aufweist, wobei das Gehäuse (3) einen Auslass (17c) aufweist sowie einen an die Austrittsfläche (21b) des bzw. jedes Katalysatorkörpers (21) angrenzenden, zum Auslass (17c) führenden Ableit-Raum (29) enthält und in diesem eine allgemeine Ableit-Strömungsrichtung (39) für das Gas definiert, wobei der Ableit-Raum (29) Leitmittel (31) zum Leiten des Gases enthält, die mindestens ein der Austrittsfläche (21b) des bzw. jedes Katalysatorkörpers (21) gegenüberstehendes Deckelement (33b, 33c, 33d, 53b) sowie zwischen verschiedenen Deckelementen (33b, 33c, 33d) angeordnete Löcher (35, 55) und/oder Zwischenräume (35) und/oder in mindestens einem Deckelement (53b) angeordnete Löcher (35, 55) aufweisen, **dadurch gekennzeichnet, dass** an die Löcher (35, 55) und/oder Zwischenräume (35) angrenzende Deckelemente (33b, 33c, 33d) und/oder Abschnitte (53c, 53d) eines Deckelements (53b) in einer zur Austrittsfläche (21b) senkrechten Blickrichtung und/oder in einer mindestens zu einem Bereich mindestens eines Deckelements (33b, 33c, 33d, 53b) senkrechten Blickrichtung und/oder in einer zur allgemeinen Ableit-Strömungsrichtung (39) senkrechten Blickrichtung entlang der allgemeinen Ableit-Strömungsrichtung (39) mindestens annähernd lückenlos aufeinander folgen und/oder einander überlappen, dass die Leitmittel (31) für den bzw. jeden Katalysatorkörper (21) ein das bzw, mindes-, tens ein Deckelement (33b, 33c, 33d, 53b) bildendes Gas-Leitorgan (33, 53) mit zwei Seitenwänden (33a, 53a) aufweisen, die mit dem bzw. jedem Deckelement (33b, 33c, 33d, 53b) des Gas-Leitorgans (33, 53) verbunden und am Katalysatorkörper (21) befestigt sind, und dass das bzw. jedes mindestens ein Deckelement (33b, 33c, 33d, 53b) sowie Seitenwände (33a, 53a) aufweisende Gas-Leitorgan (33, 53) aus einem einstückigen Körper besteht.

2. Katalysator nach Anspruch 1, **dadurch gekennzeichnet, dass** mindestens derjenige Bereich des bzw. jedes Deckelements (33b, 33c, 33d, 53d, 53e), der sich entlang der allgemeinen Ableit-Strömungsrichtung (39) stromabwärts von einem Loch (35, 55) und/oder Zwischenraum (35) zwischen zwei Seitenrändern des Deckelements (33b, 33c, 33d, 53b) befindet, überall im Abstand von der ihm gegenüberstehenden Austrittsfläche (21b) steht, wobei vorzugsweise der ganze sich zwischen zwei Seitenrändern befindende Bereich des bzw. jedes Deckelements (33b, 33c, 33d, 53b) überall in Abstand von der ihm gegenüberstehenden Austrittsfläche (21b) steht.

3. Katalysator nach Anspruch 1 oder 2, **dadurch gekennzeichnet, dass** das bzw. jedes Gas-Leitorgan (33, 53) aus einem metallischen Körper, beispielsweise aus einem Blechstück (41), besteht und dass die Seitenwände (33a, 53a) des Gas-Leitorgans (33, 53) durch Schweissen oder Hartlöten mit dem Katalysatorkörper (21)verbunden sind.

4. Katalysator nach einem der Ansprüche 1 bis 3, **dadurch gekennzeichnet, dass** das bzw. jedes Gas-Leitorgan (33) mindestens drei entlang seinen Seitenwänden (33a) treppenstufenartig aufeinander folgende Deckelemente (33b, 33c, 33d) aufweist, die von der Austrittsfläche (21b) weg geneigt sind und zwischen denen Löcher (35) und/oder Zwischenräume (35) vorhanden sind.

5. Katalysator nach einem der Ansprüche 1 bis 4, **dadurch gekennzeichnet, dass** das bzw. jedes sich zwischen zwei aufeinander folgenden Löchern (35) oder Zwischenräumen (35) befindende Deckelement (33c) eine von Loch (35) zu Loch (35) bzw. von Zwischenraum (35) zu Zwischenraum (35) gemessene Abmessung a hat, dass dieses Deckelement (33c) bzw. jedes dieser Deckelemente (33c) einen Mindestabstand b von der Austrittsfläche (21b) des ihm zugeordneten Katalysatorkörpers (21) hat, dass dieser Mindestabstand b mindestens 5%, höchstens 50% sowie beispielsweise 10% bis 30% der Abmessung a beträgt und dass an ein und dasselbe Loch (35) oder an ein und demselben Zwischenraum (35) angrenzende Ränder (33f, 33e) von zwei aufeinander folgenden Deckelementen (33b, 33c, 33d) voneinander einen Abstand c haben, der mindestens 10%, höchstens 50% und zum Beispiel 15% bis 35% der Abmessung a beträgt.

6. Katalysator nach einer der Ansprüche 1 bis 5, **dadurch gekennzeichnet, dass** die Austrittsfläche (21b) des bzw. jedes Katalysatorkörpers (21) im Wesentlichen eben ist und dass mindestens diejenigen Deckelemente (33c), die sich zwischen anderen Deckelementen (33b, 33c, 33d) befinden, im Wesentlichen eben sind und mit der Austrittsfläche (21b) einen Winkel von höchstens 45° und vorzugsweise höchstens 30° bilden.

7. Katalysator nach einem der Ansprüche 1 bis 3, **dadurch gekennzeichnet, dass** das bzw. jedes Deckelement (53b) eine Anzahl Löcher (55) und bei jedem von diesen einen angebuchteten Abschnitt (53c) aufweist.

8. Katalysator nach einem der Ansprüche 1 bis 7, **dadurch gekennzeichnet, dass** die Austrittsfläche (21b) des bzw. jedes Katalysatorkörpers (21) im Wesentlichen eben ist, dass das Gehäuse (3) eine im Wesentlichen ebene Wand (9) hat, die der Austrittsfläche (21b) des bzw. eines Katalysatorkörpers (21) in Abstand gegenübersteht und mit dieser einen Winkel bildet und dass bei jedem Loch (35, 55) und/oder Zwischenraum (35) mindestens ein an dieses Loch (35, 55) bzw. diesen Zwischenraum (35) angrenzender, ungefähr zur genannten Wand (9) des Gehäuses (3) paralleler Bereich eines Deckelements (33b, 33c, 33d, 53b) vorhanden ist, wobei zum Beispiel Deckelemente (33c) vorhanden sind, die sich zwischen anderen Deckelementen (33b, 33c, 33d) befinden, im Wesentlichen eben und ungefähr parallel zur genannten Wand (9) des Gehäuses (3) sind.

9. Katalysator nach Anspruch 8, **dadurch gekennzeichnet, dass** das Gehäuse (3) zwei V-förmig angeordnete Katalysatorkörper (21) mit einander zugewandten Eintrittsflächen (21a) und einander abgewandten Austrittsflächen (21b) enthält und einen im Querschnitt im Wesentlichen viereckförmigen, beispielsweise rechteckförmigen Mantel (7) mit zwei im Wesentlichen ebenen und zueinander parallelen Wänden (9) hat, von denen jede der Austrittsfläche (21b) von einem der Katalysatorkörper (21) zugewandt ist.

10. Katalysator nach einem der Ansprüche 1 bis 9, **dadurch gekennzeichnet, dass** jedes Loch (35, 55) und/oder jeder Zwischenraum (35) mindestens zum Teil durch einen ersten Rand (33e, 53e) und einen zweiten Rand (33f, 53f) begrenzt ist, dass der erste Rand (33e) in Bezug auf die allgemeine Ableit-Strömungsrichtung (39) an einer sich stromaufwärts befindenden Seite eines diesen Rand (33e, 53e) bildenden Deckelements (33c, 33d) oder Abschnitts (35d) eines Deckelements (53b) angeordnet ist, dass der zweite Rand (33f, 53f) in Bezug auf die allgemeine Ableit-Strömungsrichtung (39) an einer sich stromabwärts befindenden Seite eines diesen Rand (33f, 53f) bildenden Deckelements (33b, 33c) oder Abschnitts (53c) eines Deckelements (53b) angeordnet ist, dass der erste Rand (33e, 53e) sich näher bei der Austrittsfläche (21b) befindet als die am weitesten von ihm entfernte Stelle des zweiten Rands (33f, 53f) und dass die an das Loch (35, 55) und/oder den Zwischenraum (35) angrenzenden Deckelemente (33b, 33c, 33d) und/oder Abschnitte (53c, 53d) in einer Blickrichtung, die bei der am weitesten vom ersten Rand (33e, 53e) entfernten Stelle des zweiten Randes (33f, 53f) senkrecht zu dem den zweiten Rand (33f, 53f) bildenden Abschnitt (53c) des Deckelements (33b, 33c, 53b) und/oder senkrecht zu einer Tangente an diesem Abschnitt (53c) ist, entlang der allgemeinen Ableit-Strömungsrichtung (39) mindestens annähernd lückenlos aufeinander folgen und/oder einander überlappen.

11. Katalysator nach den Anspruch 10, **dadurch gekennzeichnet, dass** zwei einander abgewandte Enden des ersten Rands (33e, 53e) und die am weitesten von dieser entfernten Stelle des zweiten Rands (33f, 53f) zusammen eine Ränder-Verbindungsebene (37) definieren, die mit der Austrittsfläche (21b) einen Winkel bildet, der 45° bis 135° und vorzugsweise 60° bis 120° beträgt.

12. Katalysator nach einem der Ansprüche 1 bis 11, **dadurch gekennzeichnet, dass** der bzw. jeder Katalysatorkörper (21) gerade sowie zueinander parallele Durchgänge (21i) aufweist, die mit einer Durchgangsrichtung in die Austrittsfläche (21b) münden, dass der bzw. jeder Katalysatorkörper (21) und das bzw. jedes Deckelement (33b, 33c, 33d, 53b) derart angeordnet sind, dass die allgemeinen Ableit-Strömungsrichtung (39) in einem sich auf der der Austrittsfläche (21b) abgewandten Seite des bzw. jedes Deckelements (33b, 33c, 33d, 53b) befindenden, äusseren TeilBereich (29c) des Ableit-Raums (29) mit der Durchgangsrichtung einen Winkel bildet und dass das bzw. jedes Deckelement (33b, 33c, 33d, 53b) in einem Schnitt entlang einer Schnittebene, die zur Durchgangsrichtung und zur allgemeinen Ableit-Strömungsrichtung (39) parallel ist, mindestens zum grössten Teil einen Winkel mit der Durchgangsrichtung bildet.

13. Katalysator nach einem der Ansprüche 1 bis 12, **dadurch gekennzeichnet, dass** dem bzw. jedem Katalysatorkörper (21) ein Gas-Leitorgan (33, 53) zugeordnet ist, das ungefähr gleich lang wie die Austrittsfläche (21b) des Katalysatorkörpers (21) ist und dass das bzw. jedes Deckelement (33b, 33c, 33d, 53b) des Gas-Leitorgans (33, 53) sich mindestens annähernd über die ganze Breite der Austrittsfläche (21b) erstreckt.

14. Katalysator nach einem der Ansprüche 1 bis 13, **dadurch gekennzeichnet, dass** das bzw. jedes Deckelement (33b, 33c, 33d, 53b) mindestens in einem sich zwischen den beiden Seitenwänden (33a, 53a) befindenden, inneren Bereich überall in Abstand von der Austrittsfläche (21b) des zugeordneten Katalysatorkörpers (21) steht und dass das bzw. jedes Gas-Leitorgan (33, 53) den zugeordneten Katalysatorkörper (21) ausschliesslich mit den Seitenwänden (33a, 53a) neben und/oder bei Rändern der Austrittsfläche (21b) und nirgends im Inneren der letzteren berührt.

15. Verfahren zur Herstellung eines Katalysators (1) nach einem der Ansprüche 1 bis 14, **dadurch gekennzeichnet, dass** der bzw. jeder Katalysatorkörper (21) hergestellt wird, dass zur Bildung der Gas-Leitmittel (31) für den bzw. jeden Katalysatorkörper (21) aus einem ebenen Blechstück (41) durch Umformen sowie Stanzen und/oder Schneiden ein Gas-Leitorgan (33, 53) mit zwei Seitenwänden (33a, 53a) und mindestens einen mit diesen zusammenhängenden Deckelement (33b, 33c, 33d, 53b) gebildet und bei den Seitenwänden (33a, 53a) an dem bzw. einem Katalysatorkörper (21) befestigt wird.

16. Verfahren nach Anspruch 15, **dadurch gekennzeichnet, dass** aus einem einzigen Blechstück (41) ein Gas-Leitorgan (33, 53) mit mehreren Löchern (35, 55) und/oder Zwischenräumen (35) gebildet wird.

## Claims

1. Catalytic converter for the catalytic treatment of gas, in particular of exhaust gas of an internal combustion engine, comprising at least one catalyst body (21) which is arranged in a housing (3) and has an entry surface (21a) and an exit surface (21b) for the gas, the housing (3) having an outlet (17c) and containing a discharge space (29) which is adjacent to the exit surface (21b) of the or each catalyst body (21) and leads to the outlet (17c) and defining therein a general discharge flow direction (39) for the gas, the discharge space (29) containing guide means (31) for guiding the gas, which have at least one cover element (33b, 33c, 33d, 53b) opposite the exit surface (21b) of the or each catalyst body (21) and holes (35, 55) and/or intermediate spaces (35) arranged between different cover elements (33b, 33c, 33d) and/or holes (35, 55) arranged in at least one cover element (53b), **characterized in that** cover elements (33b, 33c, 33d) and/or sections (53c, 53d) of a cover element (53b) adjacent to the holes (35, 55) and/or intermediate spaces (35) follow one another at least almost without gaps and/or overlap one another in a direction of view perpendicular to the exit surface and/or in a direction of view perpendicular at least to a region of at least one cover element (33b, 33c, 33d, 53b) and/or in a direction of view perpendicular to the general discharge flow direction (39) along the general discharge flow direction (39), **in that** the guide means (31) for the or each catalyst body (21) have a gas guide member (33, 53) forming the or at least one cover element (33b, 33c, 33d, 53b) and comprising two side walls (33a, 53a) which are connected to the or each cover element (33b, 33c, 33d, 53b) of the gas guide member (33, 53) and are fastened to the catalyst body (21), and **in that** the or each gas guide member (33, 53) having at least one cover element (33b, 33c, 33d, 53b) and side walls (33a, 53a) consists of an integral body.

2. Catalytic converter according to Claim 1, **characterized in that** at least that region of the or each cover element (33b, 33c, 33d, 53d, 53e) which is present downstream of a hole (35, 55) and/or intermediate space (35) between two side edges of the cover element (33b, 33c, 33d, 53b) along the general discharge flow direction (39) is everywhere a distance away from the exit surface (21b) opposite it, preferably that entire region of the or each cover element (33b, 33c, 33d, 53b) which is present between two side edges being everywhere a distance away from the exit surface (21b) opposite it.

3. Catalytic converter according to Claim 1 or 2, **characterized in that** the or each gas guide member (33, 53) consists of a metallic body, for example of a sheet metal piece (41), and **in that** the side walls (33a, 53a) of the gas guide member (33, 53) are connected to the catalyst body (21) by welding or brazing.

4. Catalytic converter according to any of Claims 1 to 3, **characterized in that** the or each gas guide member (33) has at least three cover elements (33b, 33c, 33d) which follow one another in the manner of staircase steps along its side walls (33a) and are inclined away from the exit surface (21b) and between which holes (35) and/or intermediate spaces (35) are present.

5. Catalytic converter according to any of Claims 1 to 4, **characterized in that** the or each cover element (33c) present between two successive holes (35) or intermediate spaces (35) has a dimension a, measured from hole (35) to hole (35) or from intermediate space (35) to intermediate space (35), **in that** this cover element (33c) or each of these cover elements (33c) has a minimum distance b from the exit surface (21b) of the catalyst body (21) coordinated with it, **in that** this minimum distance b is at least 5%, at most 50% and, for example, 10% to 30% of the dimension a, and **in that** edges (33f, 33e) adjacent to one and the same hole (35) or to one and the same intermediate space (35) and belonging to two successive cover elements (33b, 33c, 33d) are a distance c apart, which is at least 10%, at most 50% and, for example, 15% to 35% of the dimension a.

6. Catalytic converter according to any of Claims 1 to 5, **characterized in that** the exit surface (21b) of the or each catalyst body (21) is substantially flat and **in that** at least those cover elements (33c) which are present between other cover elements (33b, 33c, 33d) are substantially flat and make an angle of at most 45° and preferably at most 30° with the exit surface (21b).

7. Catalytic converter according to any of Claims 1 to 3, **characterized in that** the or each cover element (53b) has a number of holes (55) and, in the case of each of said holes, an attached indented section (53c).

8. Catalytic converter according to any of Claims 1 to 7, **characterized in that** the exit surface (21b) of the or each catalyst body (21) is substantially flat, **in that** the housing (3) has a substantially flat wall (9) which is opposite and a distance away from the exit surface (21b) of the or a catalyst body (21) and makes an angle with said exit surface, and **in that**, at each hole (35, 55) and/or intermediate space (35), at least one region of a cover element (33b, 33c, 33d, 53b), which region is adjacent to this hole (35, 55) or this intermediate space (35) and is approximately parallel to said wall (9) of the housing (3), is present, for example cover elements (33c) being present which are located between other cover elements (33b, 33c, 33d) and are substantially flat and approximately parallel to said wall (9) of the housing (3).

9. Catalytic converter according to Claim 8, **characterized in that** the housing (3) contains two catalyst bodies (21) arranged in a V-shape and having entry surfaces (21a) facing one another and exit surfaces (21b) facing away from one another and has a lateral surface (7) substantially tetragonal, for example rectangular, in cross-section and having two walls (9) substantially flat and parallel to one another, each of which faces the exit surface (21b) of one of the catalyst bodies (21).

10. Catalytic converter according to any of Claims 1 to 9, **characterized in that** each hole (35, 55) and/or each intermediate space (35) is bounded at least partly by a first edge (33e, 53e) and a second edge (33f, 53f), **in that** the first edge (33e) is arranged, relative to the general discharge flow direction (39), on an upstream side of a cover element (33c, 33d) or section (35d) of a cover element (53b), which cover element (33c, 33d) or section (35d) forms this edge (33e, 53e), **in that** the second edge (33f, 53f) is arranged, relative to the general discharge flow direction (39), on a downstream side of a cover element (33b, 33c) or section (53c) of a cover element (53b), which cover element (33b, 33c) or section (53c) forms this edge (33f, 53f), **in that** the first edge (33e, 53e) is present closer to the exit surface (21b) than that point of the second edge (33f, 53f) which is furthest from it, and **in that** the cover elements (33b, 33c, 33d) and/or sections (53c, 53d) adjacent to the hole (35, 55) and/or the intermediate space (35), in a direction of view which, at that point of the second edge (33f, 53f) which is furthest away from the first edge (33e, 53e), is perpendicular to that section (53c) of the cover element (33b, 33c, 53b) which forms the second edge (33f, 53f) and/or perpendicular to a tangent to this section (53c), follow one another at least approximately without gaps and/or overlap one another along the general discharge flow direction (39).

11. Catalytic converter according to Claim 10, **characterized in that** two ends of the first edge (33e, 53e) which face one another and that point of the second edge (33f, 53f) which is furthest away from said ends together define an edge connecting plane (37) which makes an angle of 45° to 135° and preferably 60° to 120° with the exit surface (21b).

12. Catalytic converter according to any of Claims 1 to 11, **characterized in that** the or each catalyst body (21) has straight passages (21i) which are parallel to one another and open with a passage direction into the exit surface (21b), **in that** the or each catalyst body (21) and the or each cover element (33b, 33c, 33d, 53b) are arranged in such a way that the general discharge flow direction (39) makes an angle with the passage direction in an outer part-region (29c) of the discharge space (29), which part-region is present on that side of the or each cover element (33b, 33c, 33d, 53b) which faces away from the exit surface (21b), and **in that** the or each cover element (33b, 33c, 33d, 53b) makes, at least for the most part, an angle with the passage direction in a section along a sectional plane which is parallel to the passage direction and to the general discharge flow direction (39).

13. Catalytic converter according to any of Claims 1 to 12, **characterized in that** a gas guide member (33, 53) which has approximately the same length as the exit surface (21b) of the catalyst body (21) is coordinated with the or each catalyst body (21) and **in that** the or each cover element (33b, 33c, 33d, 53b) of the gas guide member (33, 53) extends at least approximately over the total width of the exit surface (21b).

14. Catalytic converter according to any of Claims 1 to 13, **characterized in that** the or each cover element (33b, 33c, 33d, 53b) is everywhere a distance away from the exit surface (21b) of the coordinated catalyst body (21), at least in an inner region present between the two side walls (33a, 53a), and **in that** the or each gas guide member (33, 53) touches the coordinated catalyst body (21) exclusively with the side walls (33a, 53a) next to and/or at edges of the exit surface (21b) and nowhere in the interior of the latter.

15. Method for the production of a catalytic converter (1) according to any of Claims 1 to 14, **characterized in that** the or each catalyst body (21) is produced, **in that**, for the formation of the gas guide means (31) for the or each catalyst body (21), a gas guide member (33, 53) having two side walls (33a, 53a) and at least one cover element (33b, 33c, 33d, 53b) cohesive therewith is formed from a flat sheet metal piece (41) by forming and punching and/or cutting and is fastened to the or a catalyst body (21) at the side walls (33a, 53a).

16. Method according to Claim 15, **characterized in that** a gas guide member (33, 53) having a plurality of holes (35, 55) and/or intermediate space (35) is formed from a single sheet metal piece (41).

## Revendications

1. Catalyseur pour le traitement catalytique de gaz, notamment de gaz d'échappement d'un moteur à combustion interne, avec au moins un corps de catalyseur (21) disposé dans un boîtier (3), lequel corps comporte une surface d'entrée (21a) et une surface de sortie (21b) pour le gaz, où le boîtier (3) comporte une sortie (17c) ainsi qu'une chambre de dérivation (29) contiguë à la surface de sortie (21b) du corps de catalyseur (21) respectivement de chaque corps de catalyseur (21), et conduisant à la sortie (17c) et où lequel boîtier définit dans ladite chambre de dérivation (29) une direction (39) du courant de dérivation générale pour le gaz, où la chambre de dérivation (29) comportant des moyens de guidage (31) pour le guidage du gaz, lesquels moyens comportent au moins un élément de recouvrement (33b, 33c, 33d, 53b) disposé en face de la surface de sortie (21b) du corps de catalyseur (21) respectivement de chaque corps de catalyseur (21), ainsi que des trous (35, 55) et/ou des interstices (35) disposés entre différents éléments de recouvrement (33b, 33c, 33d) et / ou des trous (35, 55) disposés dans au moins un élément de recouvrement (53b), **caractérisé en ce que** des éléments de recouvrement (33b, 33c, 33d) et / ou des tronçons (53c, 53d) d'un élément de recouvrement (53b), qui sont contigus aux trous (35, 55) et / ou aux interstices (35) se poursuivent de façon au moins à peu près sans interruption et/ou se chevauchent le long de la direction du courant de dérivation générale (39) dans une direction de regard qui est perpendiculaire à la surface de sortie (21b) et / ou dans une direction de regard qui est au moins perpendiculaire à une zone d'au moins un élément de recouvrement (33b, 33c, 33d) et / ou dans une direction de regard qui est perpendiculaire à la direction du courant de dérivation générale (39), **en ce que** les moyens de guidage (31) pour le corps de catalyseur (21) respectivement pour chaque corps de catalyseur (21) présentent un organe de guidage de gaz (33, 53), formant l'élément de recouvrement (33b, 33c, 33d, 53b) respectivement au moins un élément de recouvrement (33b, 33c, 33d, 53b), avec deux parois latérales (33a, 53a), qui sont connectées à l'élément de recouvrement (33b, 33c, 33d, 53b) respectivement chaque élément de recouvrement (33b, 33c, 33d, 53b) de l'organe de guidage de gaz (33, 53) et fixées au corps de catalyseur (21), lequel organe de guidage forme l'élément de recouvrement (33b, 33c, 33d, 53b) respectivement au moins un élément de recouvrement (33b, 33c, 33d, 53b), et **en ce que** l'organe de guidage de gaz (33, 53) respectivement chaque organe de guidage de gaz (33, 53) présentant au moins un élément de recouvrement (33b, 33c, 33d, 53b) ainsi que des parois latérales (33a, 53a) est réalisé sous la forme d'un corps en une pièce.

2. Catalyseur selon la revendication 1, **caractérisé en ce que** au moins la zone, de l'élément de recouvrement (33b, 33c, 33d, 53d, 53e) respectivement de chaque élément de recouvrement (33b, 33c, 33d, 53d, 53e), qui se trouve le long de la direction du courant de dérivation (39) générale en aval d'un trou (33, 35) et / ou d'un interstice (35) entre deux bords latéraux de l'élément de recouvrement (33b, 33c, 33d, 53b), présente partout une distance par rapport à la surface de sortie (21b) opposée, où de préférence toute la zone se trouvant entre deux bords latéraux de l'élément de recouvrement (33b, 33c, 33d, 53b) respectivement de chaque élément de recouvrement (33b, 33c, 33d, 53b), présente partout une distance par rapport à la surface de sortie (21b) opposée.

3. Catalyseur selon la revendication 1 ou 2, **caractérisé en ce que** l'organe de guidage de gaz (33, 53) respectivement chaque organe de guidage de gaz (33, 53) est composé d'un corps métallique, comme par exemple d'une pièce de tôle (41), et **en ce que** les bords latéraux (33a, 53a) de l'organe de guidage de gaz (33, 53) sont liés par un soudage ou un brasage fort au corps de catalyseur (21).

4. Catalyseur selon une des revendications 1 à 3, **caractérisé en ce que** l'organe de guidage de gaz (33) respectivement chaque organe de guidage de gaz (33) présente au moins trois éléments de recouvrement (33b, 33c, 33d) se suivant l'un après l'après l'autre le long des parois latéraux (33a) dudit organe sous la forme de gradins, lesquels éléments sont inclinés dans la direction opposée par rapport à la surface de sortie (21b) et entre lesquels éléments existent des trous (35) et / ou des interstices (35).

5. Catalyseur selon une des revendications 1 à 4, **caractérisé en ce que** l'élément de recouvrement (33c) respectivement chaque élément de recouvrement (33c), qui se trouve entre deux trous (35) ou interstices (35) consécutifs, présente une distance a mesurée de trou (35) à trou (35) respectivement d'interstice (35) à interstice (35), **en ce que** cet élément de recouvrement (33c) respectivement chaque élément de recouvrement (33c) présente une distance minimale b par rapport à la surface de sortie (21b) du corps de catalyseur (21) associé à cet élément, **en ce que** cette distance minimale b s'élève à au moins 5% et au maximum à 50%, ainsi que par exemple à au moins 10% et au maximum à 30% de la distance a et **en ce que** des bords latéraux (33f, 33e), contigus au même trou (35) ou au même interstice (35), de deux éléments de recouvrement (33b, 33c, 33d) consécutifs présentent une distance c l'un par rapport à l'autre, laquelle distance s'élève à au moins 10% et au maximum à 50%, ainsi que par exemple à au moins 15% et au maximum à 35% de la distance a.

6. Catalyseur selon une des revendications 1 à 5, **caractérisé en ce que** la surface de sortie (21b) du corps de catalyseur (21) respectivement de chaque corps de catalyseur (21b) est essentiellement plane et **en ce que** au moins les élément de recouvrement (33c) qui sont situés entre d'autres éléments de recouvrement (33b, 33c, 33d) sont essentiellement plans et forment avec la surface de sortie (21b) un angle de 45° au maximum et de préférence un angle de 30° au maximum.

7. Catalyseur selon une des revendications 1 à 3, **caractérisé en ce que** l'élément de recouvrement (53b) respectivement chaque élément de recouvrement (53b) comporte un nombre de trous et pour chacun de ces trous un tronçon (53c) attaché.

8. Catalyseur selon une des revendications 1 à 7,
**caractérisé en ce que** la surface de sortie (21b) du corps de catalyseur (21) respectivement de chaque corps de catalyseur (21) est essentiellement plane, **en ce que** le boitier (3) présente une paroi (9), qui est essentiellement plane, laquelle paroi est opposée à une distance de la surface de sortie (21b) du corps de catalyseur (21) respectivement d'un corps de catalyseur (21) et forme avec cette surface un angle et **en ce qu'**il existe pour chaque trou (35, 55) et /ou pour chaque interstice (35) au moins une zone d'un élément de recouvrement (33b, 33c, 33d) qui est contiguë à ce trou (35, 55) respectivement à cet interstice (35) et à peu près parallèle à ladite paroi (9) de ce boitier (3), où il existent par exemple des éléments de recouvrement (33c) qui se trouvent entre d'autre éléments de recouvrement qui sont essentiellement plans et à peu près parallèles à ladite paroi (9) dudit boitier (3).

9. Catalyseur selon la revendication 8, **caractérisé en ce que** le boitier (3) comporte deux corps de catalyseur, disposés en forme de V, lesquels corps ayant des surfaces d'entrée (21a) tournées l'une vers l'autre et des surfaces de sortie (21b) détournées l'une de l'autre et comporte une enveloppe (7) qui est en section essentiellement quadrangulaire, par exemple rectangulaire, avec deux parois (9) essentiellement planes et parallèles l'une par rapport à l'autre, où chaque paroi est tournée vers la surface de sortie (21b) de l'un des corps de catalyseur (21).

10. Catalyseur selon une des revendications 1 à 9, **caractérisé en ce que** chaque trou (35, 55) et / ou chaque interstice (35) est limités en partie par un premier bord (33e, 53e) et par un deuxième bord (33f, 53f), **en ce que** le premier bord (33e) est disposé par rapport à la direction de courant de dérivation générale (39) sur un côté, se trouvant en amont, d'un élément de recouvrement (33c, 33d) formant ce bord (33e, 53e) ou d'un tronçon (35b) d'un élément de recouvrement (53b), **en ce que** le deuxième bord (33f, 53f) est disposé par rapport à la direction de courant de dérivation générale (39) sur un côté, se trouvant en aval, d'un élément de recouvrement (33b, 33c) formant ce bord (33f, 53f) ou d'une section (53c) d'un élément de recouvrement (53b), et **en ce que** les éléments de recouvrement (33b, 33c, 33d) et /ou les tronçons (53c, 53d) se poursuivent de façon au moins à peu près sans interruption et/ou se chevauchent le long de la direction du courant de dérivation générale (39) dans une direction de regard qui, à l'endroit du deuxième bord (33f, 53f) qui est le plus éloigné du premier bord (33e, 53e) est perpendiculaire au tronçon (53c) de l'élément de recouvrement (33b, 33c, 53b) et /ou perpendiculaire à la tangente à ce tronçon (53c).

11. Catalyseur selon la revendication 10, **caractérisé en ce que** deux extrémités, détournés l'une de l'autre, du premier bord (33e, 53e) et l'endroit le plus éloigné du deuxième bord (33f, 53f) définissent ensemble un plan de liaison des bords (37), lequel plan forme avec la surface de sortie (21b) un angle qui s'élève à une valeur entre 45° et 135° et de préférence entre 60° et 120°.

12. Catalyseur selon une des revendications 1 à 11, **caractérisé en ce que** le corps de catalyseur (21) respectivement chaque corps de catalyseur (21) comporte des passages (21) parallèles l'un par rapport à l'autre; lesquels passages débouchent dans la surface de sortie (21b) selon une direction de passage, **en ce que** le corps de catalyseur (21) respectivement chaque corps de catalyseur (21) et l'élément de recouvrement (33b, 33c, 33d, 53b) respectivement chaque élément de recouvrement (33b, 33c, 33d, 53b) sont disposés de manière à ce que la direction de courant de dérivation générale (39) forme dans une zone partielle extérieure (29c), se trouvant sur le côté détourné de la surface de sortie (21b) de l'élément de recouvrement (33b, 33c, 33d, 53b) respectivement chaque élément de recouvrement (33b, 33c, 33d, 53b),de la chambre de dérivation (29) un angle avec la direction de passage et **en ce que** l'élément de recouvrement (33b, 33c, 33d, 53b) respectivement chaque élément de recouvrement (33b, 33c, 33d, 53b) forme dans une section le long du plan de coupe, qui est parallèle à la direction de passage et à la direction de courant de dérivation générale (39), au moins essentiellement un angle avec la direction de passage.

13. Catalyseur selon une des revendications 1 à 12, **caractérisé en ce qu'**un organe de guidage de gaz (33, 53) est associé au corps de catalyseur (21) respectivement à chaque corps de catalyseur (21), lequel organe est à peu près aussi long que la surface de sortie (21b) du corps de catalyseur (21) et **en ce que** l'élément de recouvrement (33b, 33c, 33d, 53b) respectivement chaque élément de recouvrement (33b, 33c, 33d, 53b) de l'organe de guidage de gaz (33, 53) s'étend au moins à peu près sur toute la largeur de la surface de sortie (21b).

14. Catalyseur selon une des revendications 1 à 13, **caractérisé en ce que** l'élément de recouvrement (33b, 33c, 33d, 53b) respectivement chaque élément de recouvrement (33b, 33c, 33d, 53b) est au moins dans une zone intérieure, se trouvant entre les deux parois latérales (33a, 53a), partout à une distance de la surface de sortie (21b) du corps de catalyseur (21) associé, et **en ce que** l'organe de guidage de gaz (33, 53) respectivement chaque organe de guidage de gaz (33, 53) touche le corps de catalyseur (21) associé exclusivement avec les parois latérales (33a, 53a) à côte et / ou près des bords de la surface de sortie (21b) et nulle part à l'intérieur de ladite surface.

15. Procédé pour la fabrication d'un catalyseur (1) selon une des revendications 1 à 14, **caractérisé en ce que** le corps de catalyseur (21) respectivement chaque corps de catalyseur (21) est fabriqué, **en ce que** l'on réalise pour la formation des moyens de guidage de gaz (31) pour le corps de catalyseur (21) respectivement chaque corps de catalyseur (21) à partir d'une pièce de tôle (41) plane par transformation, respectivement par poinçonnage et /ou découpage, un organe de guidage de gaz (33, 53) avec deux parois latérales (33a, 53a) et au moins un élément de recouvrement (33b, 33c, 33d, 53b) lié à ces deux parois et **en ce que** ledit organe de guidage de gaz (33, 53) est fixé proche des parois latérales (33a, 53a) au corps de catalyseur (21) respectivement un corps de catalyseur (21).

16. Procédé selon la revendication 15, **caractérisé en ce que** l'on réalise un organe de guidage de gaz (33, 53) avec plusieurs trous (35, 55) et / ou interstices (35) à partir d'une seule pièce de tôle (41).
